# EUROPEAN PATENT APPLICATION

(11) **EP 0 924 172 A1**
(43) Date of publication of application: **23.06.1999**
(21) Application number: 98123884.3
(22) Date of filing: 16.12.1998
(51) Int. Cl.: C03C 17/34, C03C 17/42

(54) **Coating a vitreous substrate**

(30) Priority: 19.12.1997 GB 9726962
(71) Applicant: GLAVERBEL, 1170 Bruxelles (BE)
(72) Inventor: Laroche, Pierre, 6120 Nalinnes (BE)
(74) Representative: Vandenberghen, Lucienne

(57) **Abstract**

A method which offers environmental and operational advantages in forming a coating on a surface of a vitreous substrate comprises the steps of (1) a chemical pre-treatment of the said surface, (2) earthing the substrate, (3) spraying on the said surface electrically charged particles of a polymer coating powder in an enclosed zone while simultaneously extracting and recovering unused particles, (4) heating and thereby curing the sprayed particles on the said surface to form a coating thereon and (5) cooling the formed coating. The invention extends to coated substrates produced by the aforementioned method and to apparatus for effecting it.

## Description

This invention relates to a method of forming a coating on a vitreous substrate, in particular on glass sheets and other glass articles. It is concerned with coatings, typically paints and varnishes, which are applied to the substrate in powder form and heated to form on the surface a liquid which is then dried to form a hard solid layer.

Historically paints and varnishes were applied to a vitreous substrate directly as liquid, for example by brushing or by a liquid spray or curtain. Such methods however increasingly do not satisfy the exacting standards required for many articles and working conditions. Thus volatile solvents from liquid paints and varnishes may create a health hazard when released into the atmosphere during the application or drying stages. Further, the formed coating may lack uniformity in thickness, either involving excessive consumption of paint or the creation of patches where the coating has insufficient thickness to provide the required protection.

The problem of achieving uniformity in coating thickness is often addressed by applying the coating in two successive layers, with the disadvantage of increasing the time required for the application.

A particular problem with the historic methods of application has been that the finished coating may have a low degree of adhesion to the underlying substrate, resulting in a low resistance to abrasion and in blistering or flaking, especially when the coated substrate is exposed to heat.

There have accordingly been a number of proposals to deposit powder paint electrostatically on a glass substrate. JP-A-8156940 obtains a painted ornamental glass vessel by forming a conductive film layer on a vessel base, applying a primer coating on the layer and electrostatically coating powder on the primer.

EP-A-0678485 describes the deposition of varnish as a surface coating on an essentially opaque glass substrate, such as a mirror or a spandrel, by projecting a powder or powder mixture on to the substrate and allowing the powder to coalesce and harden. An adhesion promoting agent can be applied to the substrate before the powder deposition

FR-A-2252307 relates to glass with a transparent anti-glare coating of, in sequence, a silane primer layer, a copolymer layer formed by applying and heating powder and, as required, a supplementary protective polymer layer also applied from a powder. FR-A-2582295 similarly relates a transparent anti-glare coating, in this instance formed continuously by depositing an adhesion promoting silane on a freshly-produced glass ribbon cooled to a temperature of 200-300°C and then applying a powder of transparent thermoplastic material.

The electrostatically applied powders of such proposals do generally give a more adhesive and uniform coating than the historic liquid methods and they do largely avoid the potential health problems associated with the evolution of volatile solvents. Health problems nevertheless remain with regard to the escape of powder particles and there is further scope for improving the visual appeal and wear-resistant properties of the coated substrate.

The present invention has the objective of safely and simply producing a glass substrate with a coating which provides a strong visual appeal and high level of wear resistance.

According to the invention there is provided a method of forming a coating on a surface of a vitreous substrate, wherein the substrate is subjected to the steps of (1) a chemical pre-treatment to prepare the vitreous surface to receive the coating, (2) earthing the substrate, (3) spraying on the said surface electrically charged particles of a polymer coating powder in an enclosed zone while simultaneously extracting and recovering unused particles, (4) heating and thereby curing the sprayed particles on the said surface to form a coating thereon and (5) cooling the formed coating.

The invention includes within its scope a polymer coating prepared as defined above and a vitreous substrate carrying such a coating.

The invention further provides apparatus for producing such a coated vitreous substrate, which comprises an enclosed chamber having one or more supply vessels to release a spray of charged particles of a polymer coating powder to be used to form a coating on the substrate, a conveyor belt to carry the substrate through the chamber, means upstream of the chamber for applying a chemical pre-treatment to the substrate and for heating or reheating of the substrate, and means downstream of the chamber for curing the deposited powder and cooling the coated substrate, and the belt is electrically conductive and earthed and extraction means are disposed downstream of the chamber to remove and recover unused powder particles.

Following the chemical pre-treatment the charged substrate attracts the powder particles to form a coating thereon. Heating causes the particles first to soften and then to coalesce into a continuous film which levels out and adheres to the pre-treated surface. In the subsequent curing a cross-linking reaction occurs to harden the deposited film. Finally the hardened film is cooled and if necessary cleaned.

The invention offers several advantages in terms of environmental requirements and of ease of operation. Well over 90% by weight of the unused powder, typically as much as 98%, is recovered and can be recycled. Release of volatile solvents and of fine particulate material into the atmosphere is avoided, which is beneficial in terms of not exposing personnel to the health risks associated with such materials, in reducing the risk of fire or explosion - since the flash point of the materials is typically more than 500°C - and in avoiding environmental taxes on release of harmful substances.

The cured coatings according to the invention have been found to have a high degree of scratch resistance. The reasons for this improvement are not fully understood but it appears in part to result from the particle size characteristics of the powder which are discussed further below.

Cleaning of a system using powdered coating materials is much easier than for those using liquid paints or varnishes, which also means that routine maintenance of the system is less frequently required.

Recovery of the powder during the deposition stage is conveniently achieved with the aid of one or more filters. The recovery may be enhanced with the aid of one or more cyclones. Preferably, the unused particles are electrically discharged (deionised) before being aspirated for recovery. Because unused particles when still ionised tend to stick to the apparatus it is advantageous to discharge them, for example with an air ioniser, prior to the recovery.

The recovered material can be placed in storage or returned to the powder feed.

The chemical pre-treatment of the substrate has the objective of enhancing its adhesion towards the powder and thus towards the finished coating, thereby promoting resistance of the coated substrate to abrasion and corrosion and avoiding the production of blisters. The preferred pre-treatment employs an silane or titanate, which is conveniently applied by spraying an aqueous solution thereof, followed by rinsing and drying. Suitable forms of silane include an aminoalkyl alkoxysilane, such as γ-aminopropyl triethoxysilane, a diaminosilane or a carboxysilane.

In one embodiment of the invention the substrate from the chemical pre-treatment is subjected to a surface preheating, for example by infra-red radiation, preferably to a temperature in the range 80 to 120°C. The pre-heating enhances the softening and melting of the powder and its adhesion to the substrate. It is not necessary to heat the whole thickness of the substrate, merely the surface to be coated.

Adhesion of the newly applied powder to the substrate can also be enhanced by applying a conductive layer to the substrate before spraying the powder. In this embodiment the conductive layer, typically of a transparent material, can be formed by the application of for example a layer of doped SnO₂ or a layer of indium nitride + SnO₂. Preferably, the layer is on the face opposite the surface to be coated, thereby permitting the powder to be deposited directly to the substrate. This configuration also assists the chemical pre-treatment. It is to be noted that the electrical conductivity of the glass itself does not change much in the temperature range 20 to 130°C.

Yet another way to promote adhesion of the powder to the substrate is to pretreat the substrate, before applying the powder, in order to discharge any electrostatic charges present on the substrate.

The substrate is preferably placed during step (3) on a electrically conductive support, for example a rubber conveyor belt with its surface treated with carbon to render it electrically conductive, and the support is earthed.

Preferably, the method of the invention includes both the said discharge of electrostatic charges and the use of an earthed electrically conductive support.

The curing [step (4)] can be effected by infra-red heating and/or by conventional heating, for example using gas heating. The substrate is preferably heated to a temperature in the range of about 160-200°C and maintained at that temperature, typically for a few minutes, to effect the curing.

It is believed that during the transport of the substrate glass towards the curing step (4) a hot surface assists the powder to be retained on the surface, by softening and adhesion to the substrate. On the other hand, in the absence of heating or other measures, the powder tends not to stick to the bare glass: the glass does not adequately retain the powder and the "coating" may include uncoated areas. Alternatively, or in combination with above-mentioned measures, the powdered substrate can be electrically discharged before step (4) in order to promote uniform adhesion of the powder to the substrate and to avoid electrostatic repulsion between powder particles on the substrate.

Preferably the electrical discharge of the powdered substrate is effected by means of one or both of an anti-static bar disposed over the substrate and an anti-static brush disposed under the substrate.

The cooling [step (5)] is preferably effected by directing dry air at the cured layer.

The main ingredient of the coating powder should be a thermosetting polymer material, this being necessary to ensure that the heating and curing step provides a product with a permanently cured coating well bonded to the vitreous substrate. Such a product has the advantage that it can be cut into pieces of a required shape and size, and that these can be assembled into a finished article, without damage to the coating. Suitable examples of thermosetting polymer materials for use in the invention include epoxy, polyester, polyurethane, acrylic and amino resins and mixtures and copolymers thereof. The polymer may thus include functional groups of two or more such resins. A hardener, for example an amine, may also be included in the resin composition.

The coating powder may additionally contain a small proportion, for example 1 to 10% by weight, of a thermoplastic polymer material such as ethylene vinyl acetate. The presence of the thermoplastic polymer material provides a flatter and smoother coating surface and thereby enhances the surface aspect of the coating.

In electrostatic projection of powdered paints and varnishes, an electric generator typically applies a continuous high voltage to a supply of powder particles. The so-charged particles are directed to an earthed target, in this instance the vitreous substrate on a conductive support which is earthed.

The powder deposition can conveniently be effected on a float glass production line, if necessary with reheating of the glass surface before the application of the powder. The substrate to be coated may suitably be carried on a conveyor belt to and through a station at which at least steps (2) and (3) are effected, i.e. the electrical charging of the substrate and the spraying of the powder. It is preferred that the conveyor belt itself is electrically conductive and earthed.

The powder is preferably homogeneous, to the extent that each particle thereof contains the same ingredients. It may be a clear material, so as to form a transparent coating such as a clear varnish or lacquer on the substrate. Alternatively the powder may contain one or more opacifiers, for example carbon black or calcium carbonate, so as to form a translucent or opaque coating.

The degree of opacity of the formed coating is not only a function of the presence of any opacifying agents but also of the polymer coating thickness and of the particle properties of the polymer powder. In general a significant presence of opacifying agents gives an opaque coating, as does a significant thickness of coating.

The coating thickness is affected by the particle size of the powder: fine particles tend to form a relatively thin coating, whereas large particles tend to form a relatively thick coating. The size of particles is also limited by the need for the charge applied to the substrate to hold the deposited particles in place before they begin to soften and coalesce together. This need limits the size and number of particles within a given thickness of coating. The average particle diameter is preferably in the range of 15 to 40 µm. The maximum particle diameter is preferably in the range of 50 to 150 µm.

It is further preferred that the powder has a wide particle size distribution, with a view to obtaining a uniform cured coating. If the particle size range is too narrow, there is a risk of forming a coating with a significant number of voids which may be difficult to fill during the curing step. In general the polymer coating has a uniform finished thickness in the range 40 to 130 µm.

The powder is desirably free of lead, lead compounds and volatile materials.

The vitreous substrate can itself be coloured, but it is generally preferred to use clear glass and to impart the required colour by appropriate addition of colouring agents to the coating powder. Organic colouring agents are generally preferred as they provide a better gloss than inorganic colorants. For example a patterned colourless transparent glass coated on the smooth face with a varnish including a green organic dye gave a lustrous green patterned glass which appeared coloured in the mass. The method of the invention thus conveniently allows production of "coloured" glass without changing the composition of the glass in the production furnace and avoids production time being lost in the change of colour.

The method of the invention is applicable to flat glass or to patterned glass, for example cast patterned glass. In the case of patterned glass the coating may be deposited either on the smooth face or the patterned (relief) face. The formation according to the invention of a high quality deposit on the patterned face provides a considerable improvement in coating quality compared with traditional liquid paint. The latter carries a risk of formation of blisters after drying of the coating, especially in the recesses of patterned glass where liquid deposition tends to create a coating thickness too great to permit uniform evaporation of solvent. The choice of which face should carry the coating depends on such factors as the initial depth of the relief and the required visual effect of the coating. If the coating is deposited on the patterned face, the relief is reduced, whereas deposition on the smooth face gives a more uniform aspect.

If required, a mask or masks can be placed on the vitreous substrate before the powder deposition so as to create drawings or decorative motifs on its surface.

The coated product can if required be further treated. In the case of a non-opaque (transparent or translucent) coating a transparent varnish can be deposited thereon, preferably by powder deposition as above to maintain the desired quality and uniformity of product and to minimise any health risks.

A transfer and/or a silver plating layer can additionally be deposited on the varnish. A transfer includes organic colorants on a support paper. It is placed on the varnish and heated under pressure to cause the diffusion of the colorants into the varnish. A silver layer can be subsequently deposited to form a decorative mirror.

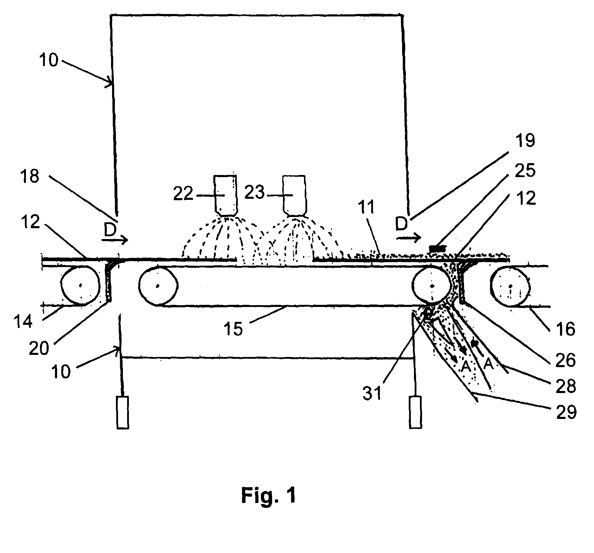

The accompanying Figure is a diagrammatic cross sectional view of apparatus suitable for conducting the method of the invention. The apparatus comprises an enclosed paint chamber 10 built around the downstream end of a float glass production line so as to deposit a paint coating on glass substrate sheets 12 emerging from the float line. The apparatus further comprises (not shown in the figure) means upstream of the chamber 10 for applying silane treatment and for heating or reheating of the substrate sheets 12 and gas heating means downstream of the chamber 10 for curing the deposited powder.

The chamber has an inlet port 18 and outlet port 19 through which a series of conveyor belts 14, 15, 16 carry the substrate sheets 12 to, through and out of the chamber 10 in a horizontal direction indicated by the arrows D. The conveyor belt 15 is formed of rubber, its surface to contact the substrate sheets 12 is impregnated with carbon to render it electrically conductive, and it has an earth connection (not shown).

An anti-static brush 20 extends across the underside of a sheet 12 just upstream of the inlet 18 to discharge the glass as it enters the chamber 10.

Within the chamber 10 are two rotating supply vessels 22, 23 disposed above the conveyor 15 to release a continuous spray of powder paint particles across the width of the sheets 12. An electrical charge of 70 kV is applied to the vessels 22,23 so as to impart a charge to the released powder. The charged powder particles are attracted to the sheets 12 on the earthed conveyor 15 and thereby form a powder layer 11 on the upper surface of the sheets.

An anti-static bar 25 and anti-static brush 26 extend across respectively the upper and lower surfaces of the sheet 12 just downstream of the outlet 19. Beneath the brush 26 are disposed an air feed duct 28 and an air extraction duct 29, both extending across the width of the conveyor 15 to carry air along the path indicated by the arrows A. A rotary cleaning brush 31 also extends across the width of the underside of the conveyor 15. Air is introduced into the feed duct 28 and extracted from the duct 29 by electric fans (not shown). The extraction duct 29 leads to further discharge means and a cyclone filter (not shown) for the removal of suspended powder from the extracted air stream.

In operation of the apparatus, glass substrate sheets 12 from the float glass line are silanised and heated and carried by the conveyor 14 to the paint chamber 10. As they enter the chamber 10 the sheets 12 are electrically discharged by the anti-static brush 20 at the inlet 18. Within the chamber 10 ionised powder (-70 kV) is sprayed from the powder supply vessels 22, 23 on to the earthed sheets 12. The powder-coated glass emerging from the chamber outlet 19 carries a charge of about - 2/-4 kV. At the exit from the cabin, the glass sheets 12 leave the conductive belt 15 and the glass is discharged by means of the anti-static bar 25 and anti-static brush 26. Unused powder is drawn off the conveyor surface by a combination of gravity, the rotary brush 31 and the aspirating effect of the air stream through the ducts 28 and 29. The powder is removed as a suspension in the said air stream, the suspension is electrically discharged and the powder is recovered in the cyclone filter. The coated sheets 12 pass to the curing station and after curing are cooled to ambient temperature.

Apparatus as described above can also be employed to apply a coating to a mirror surface.

The invention is described in more detail below with reference to the following non-limiting examples. Tests applied in one or more of the examples were as follows.
Hot water. The coated glass was immersed and kept in hot water (95°C) for a prolonged period [at least 5 days (120 hours), except for examples 1 and 2 which were tested for 24 hours]. The quality is considered excellent if the layer presents no loss of adhesion after 120 hours at 95°C.
Hardness. The standard Persoz hardness test was applied to the coated glass.
Scratch resistance (Clemen test). A tungsten carbide pointer, provided with a variable weight, is applied to a coated sample. The depth of scratching considered necessary for a high quality paint coating is less than 2.5 µm for a weight of 800g: the smaller the depth of scratch the better the resistance to scratching.
Moist fog. A coated sample was placed in a chamber with a temperature of 40°C and an atmosphere of 100 % relative humidity for 480 hours. The change in the sample was observed.
Breakage. A coated sample was broken into two and the broken edges inspected to determine whether a clean break had occurred.
Cross-cut. Scratches were made on a coated sample to a depth of up to 25 µm: a first set of scratches parallel to each other and a second set at right angles to the first. An adhesive tape was then applied to the scratched area and removed. The scratched area was then inspected to observe any removal of coating from the substrate. The extent of such removal was graded on a scale of 0 (no or insignificant removal) to 5 (extensive removal).
Colour. The standard Hunter co-ordinates, L, a and b, were observed and recorded.

### EXAMPLE 1

The apparatus employed for this example was of the type described above, including an enclosed painting chamber around the downstream end of a float glass production line.

Colourless, smooth, transparent glass substrate sheets from the float glass line were pre-treated with γ-aminopropyl triethoxysilane, rinsed, dried and then reheated to 120°C. Each substrate sheet in turn was located on the electrically conductive and earthed conveyor belt with a carbon treated rubber surface. Electrostatically charged particles of an acrylic polymer powder were deposited on the substrate. The acrylic polymer composition included a polycarboxylic acid as reticulating agent. The powder particles had a mean diameter of 20 µm and a maximum diameter of 63 µm. The temperature of the so-coated substrate was raised to 200°C by gas heating, thereby encouraging the powder particles to melt and spread across the substrate surface and effecting the curing of the deposited acrylic polymer. The resulting coating had a thickness of 45 ±5 µm.

The coated glass was subjected to the hot water test and the breakage test. No blistering of the coating was observed after 24 hours of the hot water test and no break-away of the coating occurred on breakage of the glass.

### EXAMPLE 2

In a variation of Example 1, the same steps and materials were used except that the powder particles had a mean diameter of 33 µm and a maximum diameter of 100 µm. The resulting coating had a thickness of 95 ±15 µm.

No blistering of the coating was observed after 24 hours in the hot water test and no break-away of the coating occurred on breakage of the glass.

### EXAMPLE 3

The procedure of Example 1 was again followed, with the silane treatment being applied to the glass at room temperature. The applied powder was a black resin (*Oxyplast 60TC*™) comprising a polyglycidyl methacrylate with a polycarboxylic reticulating agent. The temperature of the coated substrate as it emerged from the curing oven was 181°C. The mean particle size of the powder was 20 µm, with a maximum diameter of 63 µm. The resulting coating had a thickness of 62 µm. Samples of the coated glass were subjected to tests as recorded in the accompanying Table.

### EXAMPLE 4

The procedure of Example 3 was followed with the difference that the conveyor belt had no carbon-treated rubber surface. The temperature of the coated substrate as it emerged from the curing oven was 175°C. The formed coating had a thickness of 71 µm. Samples of the coated glass were subjected to tests as recorded in the accompanying Table.

### EXAMPLE 5

The procedure of Example 1 was repeated for a transparent glass patterned on one side (*Chinchilla™* brand) and a powdered acrylic varnish containing a green organic dye. The varnish powder was applied to the smooth face. A lustrous green patterned glass was obtained which appeared coloured in the mass. This type of coating offers the advantage of providing a simplified procedure for the production of glass resembling coloured glass. To achieve the same colouring effect by dispersing dye through the thickness of the glass requires changing the composition of the glass in the production furnace, which slows down production because of the time lost in changing from one colour to another.

### EXAMPLE 6

In a variation of Example 5, the powder was applied to the patterned face of the glass, thereby modifying the aspect of the patterned face while retaining the appearance of glass coloured lustrous green in the mass.

### EXAMPLE 7

The procedure of Example 1 was followed for a transparent patterned glass having deep relief on one side. The applied powder was a mauve-coloured acrylic resin with a carboxylic function, (*Oxyplast™* Metallic Satin PR 29-FR1578/7C). The varnish powder was applied to the patterned face. The product was a mauve-coloured opaque decorative glass.

### EXAMPLE 8 (Comparative: classical Lacobel™ product)

An alkyd-melamine paint was applied to a clear glass substrate by a classical liquid curtain. In comparison with glass coated in the examples above, the glass had inferior water resistance in the hot water test, with blistering of the paint after 5 days: see results in the accompanying Table. Furthermore, the results of the cross-cut test and Clemen test were not as good as for examples 3 and 4, indicating inferior mechanical resistance, in particular a reduced resistance to the formation of scratches.

### EXAMPLE 9

The procedure of Example 1 was followed. The glass substrate was silane treated and then reheated to 100-120°C. The applied powder was a black resin (*Oxyplast 40C*™) comprising a polyglycidyl methacrylate with a polycarboxylic reticulating agent. The particles had a mean diameter of 33 µm and a maximum diameter of 100 µm. The coating was cured in an infra-red oven, having heating elements at a temperature of approximately 900°C, and infra-red emission in the "mean infra-red domain" with a wavelength between 1 and 7 µm. The temperature of the coated substrate as it emerged from the curing infrared oven was 170- 175°C. The resulting coating had a thickness of 121 µm. Samples of the coated glass were subjected to tests as recorded in the accompanying Table.

A sample of the Example 9 coated glass was assembled with a 2 mm glass sheet by tape and the so-formed product was submitted to the "Moist fog" test. There was no significant deterioration after 48 hours (only 2 spots on a 15x25 cm sample). On the other hand a similar product in which the coated sheet carried a traditional liquid, alkyd-melamine "*Lacobel*" coating suffered overall deterioration after only 24 hours of the test.

### EXAMPLE 10

The procedure of Example 1 was followed. The glass substrate was silane treated then reheated at 100-120°C. The applied powder was a black resin (*Oxyplast 49TC*™) comprising a polyglycidyl methacrylate with a polycarboxylic reticulating agent. The particles had a mean diameter of 20.6 µm and a maximum diameter of 63 µm. The coating was cured in an infra-red oven, having heating elements at a temperature of approximately 900°C, and infra-red emission in the "mean infra-red domain" with a wavelength between 1 and 7 µm. The temperature of the coated substrate as it emerged from the curing infra-red oven was 170-175°C. The resulting coating had a thickness of 108 µm. Samples of the coated glass were subjected to tests as recorded in the accompanying Table.

### EXAMPLE 11

The procedure of Example 1 was followed. The glass substrate was silane treated then reheated at 100-120°C. The applied powder was a black resin (*Oxyplast 50TC™*) comprising a polyglycidyl methacrylate with a polycarboxylic reticulating agent. The particles had a mean diameter of 20.6 µm and a maximum diameter of 63 µm. The coating was cured in an infra-red oven, having heating elements at a temperature of approximately 900°C and infra-red emission in the "mean infrared domain" with a wavelength between 1 and 7 µm. The temperature of the coated substrate as it emerged from the curing infrared oven was 170- 175°C. The resulting coating had a thickness of 86 µm. Samples of the coated glass were subjected to tests as recorded in the accompanying Table.

The products of Examples 9, 10 and 11 were also tested for their resistance to placement glues of the silicone oxime and silicone alkoxy types. Excellent results were obtained for all these examples.

### EXAMPLE 12

In a variation of Example 11, again using the black resin (*Oxyplast 50TC*™), the infra-red oven was at a higher temperature: the temperature of the coated substrate as it emerged from the curing infra-red oven was 190-195°C instead of 170-175°C. The resulting coating had a thickness of 72 µm.

As shown in the accompanying table the results were poor for the moist fog test. This is thought to be because the baking conditions were severe and produced a highly reticulated coating. It is supposed that there is a high level of stress at the glass/coating interface which reduces the moisture resistance.

### EXAMPLE 13

The procedure of Example 1 was followed. The glass substrate was silane treated and then reheated to 100 to 120°C. The applied powder was a black resin (*Oxyplast 61TC*™)) comprising a polyglycidyl methacrylate with a polycarboxylic reticulating agent. The particles had a mean diameter of 20.6 µm and a maximum diameter of 63 µm. In this Example the coating was cured in a thermoreactor oven comprising radiant panels and generating infra-red energy by catalytic combustion of natural gas. The infra-red emission in the "mean infrared domain" had a wavelength between 2 and 10 µm (compared with the wavelength between 1 and 7 µm for the infra-red oven of the preceding examples). The temperature of the coated substrate as it emerged from the curing oven was 170°C. The resulting coating had a thickness of 74 µm. The results obtained were not as good as previous examples particularly as regards the hot water test: some small holes were formed in the coating after this test whereas the other examples showed good hot water resistance. It is thought that the thermoreactor oven gives much more rapid heating than infra-red waves, producing rapid fusion of the coating and surface polymerisation which traps air in the coating, leading under severe conditions to microbubbles in the product.

**Table**

| Ex. | Thickness | Persoz Hardness | Moist fog test | Clemen test | Cross-cut test | Water test | Hunter co-ordinates | | | Breakage |
|---|---|---|---|---|---|---|---|---|---|---|
| | (µm) | | | (µm) | | (95°C) | L | a | b | |
| 3 | 62 | 274 | OK | 0.9 | 0-1 | OK | 21.51 | -0.13 | -0.35 | Clean |
| 4 | 71 | 224 | OK | 1.4 | 0-1 | OK | 21.66 | -0.12 | -0.43 | Clean |
| *8 comp* | *40* | *223* | *some diffusion* | *2.5-3.5* | *2* | *blistering* | *21.18* | *-0.05* | *-0.47* | *Clean* |
| 9 | 121 | 216 | OK | * | 0-1 | OK | 22.68 | -0.11 | -0.44 | Clean |
| 10 | 108 | 180 | OK | * | 0-1 | OK | 22.59 | 0.13 | -0.29 | Clean |
| 11 | 86 | 176 | OK | * | 0-1 | OK | 22.56 | 0.14 | -0.16 | Clean |
| 12 | 72 | 210 | KO | * | 0-1 | OK | 22.57 | 0.13 | -0.16 | Clean |

| | | | | | | | | | | |
|---|---|---|---|---|---|---|---|---|---|---|
| * not measurable: scratches insufficiently deep | | | | | | | | | | |

## Claims

1. A method of forming a coating on a surface of a vitreous substrate, wherein the substrate is subjected to the steps of (1) a chemical pre-treatment to prepare the vitreous surface to receive the coating, (2) earthing the substrate, (3) spraying on the said surface electrically charged particles of a polymer coating powder in an enclosed zone while simultaneously extracting and recovering unused particles, (4) heating and thereby curing the sprayed particles on the said surface to form a coating thereon and (5) cooling the formed coating.

2. A method as claimed in claim 1, in which unused powder particles from the deposition step are recovered by aspiration.

3. A method as claimed in claim 1 or claim 2, in which unused powder particles from the deposition step are recovered with the aid of one or more filters.

4. A method as claimed in claim 3, in which the unused particles are recovered with the aid of one or more cyclones.

5. A method as claimed in any preceding claim, in which the unused particles are electrically discharged prior to their recovery.

6. A method as claimed in any preceding claim, in which the recovered powder particles material are returned to the powder feed.

7. A method as claimed in any preceding claim, in which the chemical pre-treatment of the substrate is effected by a silane or titanate.

8. A method as claimed in claim 7, in which the silane or titanate is applied by spraying an aqueous solution thereof.

9. A method as claimed in claim 7 or claim 8, in which the chemical pre-treatment is effected by a silane selected from an aminoalkyl alkoxysilane, a diaminosilane and a carboxysilane.

10. A method as claimed in any preceding claim, in which after step (1) the chemically pre-treated substrate is electrically discharged before applying the powder.

11. A method as claimed in claim 10, in which the substrate is electrically discharged by means of an anti-static brush.

12. A method as claimed in any preceding claim, in which the coating powder comprises a thermosetting polymer selected from epoxy, polyester, polyurethane, acrylic and amino polymer resins, or mixtures or copolymers thereof.

13. A method as claimed in any preceding claim, in which the substrate from the chemical pre-treatment is placed on an electrically conductive surface for steps (2) and (3).

14. A method as claimed in any preceding claim, in which the powder deposition is effected on a float glass production line.

15. A method as claimed in any preceding claim, in which the substrate is preheated to a temperature in the range 80 to 120°C after the chemical pre-treatment and before the powder deposition.

16. A method as claimed in any preceding claim, in which a conductive layer is applied to the substrate before application of the powder.

17. A method as claimed in claim 16, in which the conductive layer is formed by the application of a layer of doped SnO₂ or a layer of indium nitride + SnO₂.

18. A method as claimed in claim 16 or claim 17, in which the layer is on the face opposite the surface to be coated.

19. A method as claimed in any preceding claim, in which, after step (3)and before step (4), the powdered substrate is electrically discharged.

20. A method as claimed in claim 19, in which the powdered substrate is electrically discharged by means of an anti-static bar disposed over the substrate and/or by means of a anti-static brush disposed under the substrate.

21. A method as claimed in any preceding claim, in which the powder includes a colouring material.

22. A method as claimed in claim 21, in which the substrate is clear glass to which colour is imparted by the coating.

23. A method as claimed in any preceding claim, in which the powder is a clear material, so as to form a transparent coating on the substrate.

24. A method as claimed in any of claims 1 to 22, in which the powder contain one or more opacifiers, so as to form a translucent or opaque coating.

25. A method as claimed in any preceding claim, in which the powder has a mean particle diameter in the range of 15 to 40 µm.

26. A method as claimed in any preceding claim, in which the powder has a maximum particle diameter in the range of 50 to 150 µm.

27. A method as claimed in any preceding claim, in which the powder has a wide particle size distribution.

28. A method as claimed in any preceding claim, in which the powder deposited on the substrate is heated to a temperature in the range of about 150 to 200°C, preferably 165-180°C, and maintained at that temperature to effect the curing.

29. A method as claimed in claim 28, in which the powder deposited on the substrate is heated to a temperature in the range of 165 to 180°C.

30. A method as claimed in any preceding claim, in which a mask is placed on the vitreous substrate before the powder deposition so as to create drawings or decorative motifs on its surface.

31. A method as claimed in any preceding claim, in which the coated product is given a further coating which comprises a transparent varnish.

32. A method as claimed in claim 31, in which the further coating is applied by powder deposition.

33. A method as claimed in claim 31 or claim 32, in which a transfer and/or a silver plating layer is additionally deposited on the varnish.

34. A polymer coating prepared by a method as claimed in any preceding claim, which has a finished thickness in the range 30 to 130 µm.

35. A vitreous substrate comprising a coating as claimed in claim 34.

36. A vitreous substrate comprising a coating formed on a chemically pre-treated surface thereof by applying an electrostatic charge to the substrate, spraying on the said surface electrically charged particles of a polymer coating powder in an enclosed zone while simultaneously extracting and recovering unused particles, and heating and thereby curing the sprayed particles on the said surface.

37. Apparatus for producing a coated vitreous substrate, which comprises an enclosed coating chamber 10 having one or more supply vessels 22, 23 to release a spray of charged particles of a polymer coating powder to be used to form a coating on the substrate, a conveyor belt 15 to carry the substrate 12 through the chamber 10, means upstream of the chamber 10 for applying a chemical pre-treatment to the substrate 12, and for heating or reheating of the substrate 12 and means downstream of the chamber 10 for curing the deposited powder and cooling the coated substrate, and the belt 15 is electrically conductive and earthed and extraction means are disposed downstream of the chamber to remove and recover unused powder particles.

38. Apparatus as claimed in claim 37, in which anti-static means are disposed upstream of the chamber to discharge the glass and downstream of the chamber to discharge unused powder particles prior to their recovery.
